# FASCICULE DE BREVET EUROPEEN

(11) **EP 1 407 806 B1**
(45) Date de publication et mention de la délivrance du brevet: **22.03.2006**
(21) Numéro de dépôt: 03292333.6
(22) Date de dépôt: 24.09.2003
(51) Int. Cl.: B01D 29/15, E21B 43/12, E21B 43/08

(54) **Crépine à perte de charge controlée**
Filterrohr mit kontrolliertem Druckverlust
Screen with controlled pressure drop

(30) Priorité: 09.10.2002 FR 0212555
(43) Date de publication de la demande: 14.04.2004
(73) Titulaire: Institut Français du Pétrole, 92852 Rueil-Malmaison Cedex (FR)
(72) Inventeur: Wittrisch, Christian, 92500 Rueil Malmaison (FR)

(56) Documents cités:
- WO-A-02/31314
- GB-A- 2 325 949
- US-A- 5 476 143

## Description

La présente invention concerne un dispositif pour contrôler le drainage d'une formation géologique par un puits foré à travers le gisement. L'invention est particulièrement adaptée à l'exploitation de gisements d'hydrocarbures auxquels on accède par des forages horizontaux, ou fortement inclinés par rapport à la verticale. Pour exploiter un gisement, par exemple pétrolier, on place généralement dans le forage des éléments de conduite perforée afin de permettre la collecte de l'effluent dans l'espace intérieur de la conduite, tout en évitant des obstructions du drain par un éboulement des parois, ou par des venues de sables qui risquent de s'accumuler. Ces éléments de conduite peuvent être des tubes perforés, ou des crépines plus perfectionnées fabriquées à partir de fils métalliques enroulés sur un support métallique, puis soudés. Les espaces entre les fils déterminent la capacité de filtration de l'effluent. Les crépines peuvent aussi être réalisées à partir d'éléments filtrants, en grille ou grillage, enroulés autour d'un support.

La présente invention s'applique aussi à l'injection d'un fluide spécifique dans une formation géologique afin de favoriser la production, soit vers un autre puits, soit dans le même puits dans une phase ultérieure. Dans ce cas de circulation, la répartition de la perte de charge tout au long du drain, est importante afin de contrôler et de répartir l'injection dans les zones réceptrices.

Dans le cas de drain de grande longueur, il est courant que la pression de pore du gisement soit variable sur la longueur, et/ou que la perte de charge à l'intérieur de cette longue conduite de production ait un impact sur l'écoulement de l'effluent de la couche vers la collecte. Aussi, on peut être amené à disposer dans le drain des tubes de collecte ayant des perforations de densité, et de section de passage, différents en fonction de leur position longitudinale dans le drain. On connaît le document WO-02/31314 qui décrit un élément de drain ayant une crépine constituée de tiges creuses pour collecter des hydrocarbures, lesdites tiges ayant des passages dont les caractéristiques géométriques sont telles qu'elles peuvent créer, en écoulement, une perte de charge déterminée. Cependant, la constitution de cette crépine nécessite des moyens et procédés spécifiques par rapport aux fabrications conventionnelles.

On connaît également les documents US-5269376 et US-5242021 qui décrivent des procédés de production et/ou d'injection dans un réservoir pétrolier, qui peuvent avantageusement utiliser la présente invention.

La présente invention se propose de fournir un élément de crépine permettant de contrôler la perte de charge créée par des conduits d'écoulement de l'élément lors de la circulation d'un fluide entre l'extérieur de la crépine et son canal intérieur, quel que soit le sens de circulation. La construction de la présente invention est simplifiée et donc le coût en est minoré.

Ainsi, la présente invention concerne un dispositif de crépine à perte de charge contrôlée comportant un élément filtrant circonscrit et centré sur un tube de base par des entretoises longitudinales par rapport à l'axe du tube et disposées selon le diamètre du tube de façon à découper l'espace annulaire, défini par l'élément filtrant et le tube, en secteurs délimités par lesdites entretoises, et dans lequel des tubes de collecte sont disposés et débouchent par une extrémité dans lesdits secteurs.

Les entretoises peuvent comporter des ouvertures de manière à ce que les secteurs communiquent hydrauliquement entre eux, de façon que l'effluent puisse circuler.

L'espace annulaire entre le tube de base et l'élément filtrant peut être obturé à ses deux extrémités par des pièces en forme de couronne, et dans lequel lesdits tubes de collecte peuvent être fixés sur une face d'une couronne au droit de perçages dans la couronne de manière à ce que le conduit interne de chacun des tubes de collecte communique avec l'autre face de la couronne.

La couronne peut comporter des moyens d'obturation des perçages.

L'espace annulaire peut être obturé à ses deux extrémités par des couronnes portant des tubes de collecte.

Des ouvertures dans le tube de base peuvent permettre l'écoulement d'un effluent dans l'espace intérieur dudit tube après circulation à travers l'élément filtrant et les tubes de collecte. Une chemise coulissante interne au tube de base peut être adaptée à obturer les ouvertures.

Le dispositif peut s'appliquer avantageusement à la constitution d'une conduite filtrante placée dans un drain de collecte d'un effluent produit par la formation dans laquelle le drain est foré.

D'une manière équivalente, le dispositif peut s'appliquer à la constitution d'une conduite filtrante placée dans un drain destiné à l'injection d'un fluide, par exemple pour améliorer la production d'un autre drain, ou pour traiter la formation dans laquelle le drain est foré pour activer son débit de production ou pour colmater des venues d'eau.

L'invention sera mieux comprise et ses avantages apparaîtront plus clairement à la lecture de la description suivante d'exemples de réalisation, nullement limitatifs, illustrés par les figures ci-après annexées, parmi lesquelles:
- la figure 1 montre une coupe schématique de la crépine selon l'invention,
- la figure 2 montre en perspective l'élément collecteur,
- la figure 3 montre une coupe partielle du corps de la crépine,
- la figure 4 montre une coupe partielle longitudinale qui détaille l'élément filtrant.
- la figure 5 montre des moyens d'obturation d'un tube de collecte.

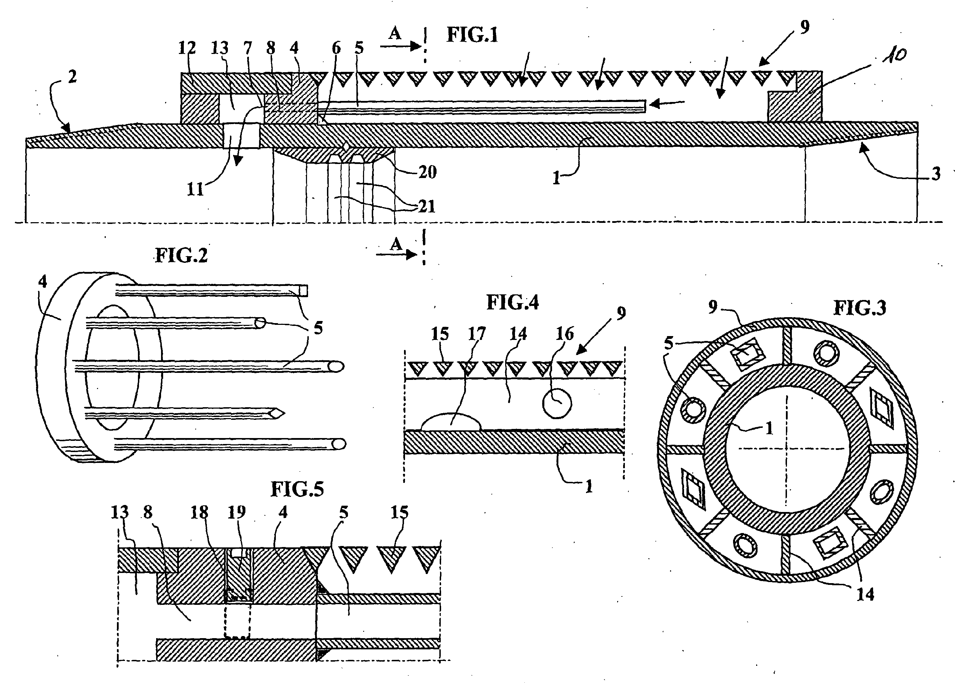

La figure 1 montre en coupe un dispositif selon l'invention constitué par un tube 1 se terminant aux deux extrémités par des moyens de connexion 2, 3, généralement des filetages mâle et femelle. Pour constituer une colonne de drainage de longueur déterminée, il suffit d'assembler par vissage le nombre nécessaire de dispositifs.

Sur le tube de base 1, on place une couronne 4 comportant un ensemble de tubes 5 de longueur et de diamètre de passage déterminés. La couronne 4 peut être soudée sur le tube 1, par exemple selon la soudure référencée 6, ou par tout autre moyen à la portée de l'homme du métier. La fixation de chaque tube 5 sur la couronne 4 est telle que le canal interne du tube communique avec la face 7 de la couronne par des conduits 8.

Un élément filtrant 9 entoure les tubes en venant se fixer, d'un coté sur la couronne 4 et de l'autre sur un anneau 10. Cet élément filtrant est, par exemple constitué par enroulement d'un fil métallique sur des pièces d'appui disposées selon les génératrices du cylindre. Le jeu entre les fils détermine la capacité de filtration. L'élément filtrant est décrit plus en détail sur les figures 3 et 4. L'élément filtrant peut aussi être fabriqué à partir d'une toile métallique dont le nombre de fils par unité de surface ("mesh") détermine la taille de filtration. L'élément filtrant peut aussi être fabriqué à partir d'une plaque perforée.

Dans une autre version, la couronne 10 peut être remplacée par une seconde couronne de collecte comportant des tubes, similaire à la couronne 4 et aux tubes 5 de la figure 1. Ainsi, dans cette variante, des tubes de collecte 5 se trouvent disposés parallèles dans l'espace annulaire entre le tube de base 1 et l'élément filtrant 9.

Le tube 1 comporte au moins une ouverture 11 qui permet le passage de l'effluent dans l'espace intérieur dudit tube. Un capot 12 forme une chambre annulaire 13 dans laquelle débouche les canaux 8 des tubes 5, ainsi que les ouvertures 11. Dans la variante à double couronne de collecte, une deuxième chambre annulaire 13 et des ouvertures 11 sont situées sur l'autre extrémité du tube de base.

Ainsi, l'effluent provenant de la formation peut s'écouler à travers l'élément filtrant 9 qui retient les sables, passe dans les tubes 5 qui communiquent avec la chambre 13, puis s'écoule dans l'espace intérieur du tube 1 par les ouvertures 11. Les pertes de charges provoquées par cette circulation sont ajustables (ou réglables) en fonction de la dimension (longueur, diamètre, rugosité) et du nombre de tubes en communication. Des moyens de fermeture, ou d'obturation, des tubes 5 sont accessibles de l'extérieur du dispositif de manière à pouvoir effectuer un réglage des pertes de charge lors de l'installation en augmentant ou en diminuant le nombre de tubes en service. La figure 5 montre plus en détail une réalisation de moyen d'obturation des tubes 5.

Sur la figure 1, on décrit une chemise 20 interne au tube de base 1 qui a pour fonction de permettre la fermeture des ouvertures 11. Cette chemise 20 comporte des gorges 21 dans lesquelles peuvent venir s'accrocher un outil de manoeuvre descendu dans l'espace intérieur de la conduite de production; Par traction sur cet outil, on déplace en translation la chemise pour obturer les ouvertures 11.

La figure 2 montre en perspective la couronne 4 équipée d'un certain nombre de tubes 5 répartis, de préférence, régulièrement autour d'un diamètre. La section des tubes peut être carrée, rectangulaire, circulaire, elliptique, ou en forme de haricot permettant d'occuper au mieux l'espace d'un secteur torique.

La figure 3 montre une coupe selon AA de la crépine. L'élément filtrant 9 est constitué d'un fil enroulé 15 puis soudé sur des supports ou entretoises 14 disposés selon le rayon en s'appuyant longitudinalement le long de la surface extérieure du tube de base 1. Le nombre des entretoises 14 est fonction du diamètre du dispositif. La figure 3 montre la disposition des tubes 5 entre deux entretoises 14. Dans les variantes d'utilisation de feuilles perforées ou de toiles tissées, les feuilles sont pliées autour des supports pour former un cylindre.

La figure 4 montre en vue de coté les entretoises 14 qui comportent des passages: en forme d'orifices 16, ou en usinages 17, qui autorisent une libre circulation de l'effluent autour de la périphérie du tube 1. La surface de passage doit être suffisante pour ne pas perturber le réglage des pertes de charge.

La figure 5 illustre un exemple de moyens d'obturation d'un tube 5. Dans la couronne 4, des perçages taraudés 18 traversent les conduits 8 de manière à ce qu'une vis 19 puisse obturer le conduit 8 lorsqu'elle est vissée, et autoriser l'écoulement lorsque la vis est dévissée. Ce réglage peut se faire avec une clé.

Ainsi constitué, le dispositif peut être fabriqué et assemblé selon le mode suivant:
- on fabrique sur un mandrin l'élément de filtration 9 équipé d'entretoises 14;
- on usine sur un tube de base les filetages de connexion, les orifices 11;
- on fabrique la couronne 4 équipée des conduits 8, des moyens d'obturation des conduits, des tubes 5;
- on enfile la couronne 4 sur le tube et on la fixe;
- à partir de l'autre extrémité du tube, on enfile l'élément de filtration en plaçant les tubes 5 entre les entretoises 14;
- on fixe la couronne 10 sur le tube 1 et l'élément de filtration, ou on enfile une autre couronne 4 équipée de tubes de collecte;
- on enfile le capot 12 pour rendre étanche la chambre annulaire 13.

Selon l'invention, on règle le niveau de pertes de charge de chacun des dispositifs en cours d'assemblage des dispositifs de crépine en surface. En fonction de la longueur du drain, et compte tenu de la position de chacun des dispositifs par rapport à la formation productrice, on obture, ou on ouvre, un certain nombre de tubes de collecte pour augmenter, ou diminuer les pertes de charge dues à l'écoulement de l'effluent à travers le dispositif selon l'invention.

Dans le cas d'utilisation des crépines en injection, le fluide injecté circule dans le sens inverse par rapport au sens d'écoulement en production, c'est-à-dire de l'espace interne du tube de base, par les ouvertures 11, puis dans les tubes 5 où des pertes de charges sont créées, avant de sortir par les éléments filtrants pour pénétrer dans la formation géologique environnante.

## Revendications

1. Dispositif de crépine à perte de charge contrôlée comportant un élément filtrant (9) circonscrit et centré sur un tube de base (1) par des entretoises (14) longitudinales par rapport à l'axe du tube et disposées selon le diamètre du tube de façon à découper l'espace annulaire, défini par l'élément filtrant et le tube, en secteurs délimités par lesdites entretoises, et dans lequel des tubes de collecte (5) sont disposés et débouchent par une extrémité dans lesdits secteurs.

2. Dispositif selon la revendication 1, dans lequel lesdites entretoises comportent des ouvertures (16, 17) de manière à ce que les secteurs communiquent hydrauliquement entre eux.

3. Dispositif selon l'une des revendications précédentes, dans lequel l'espace annulaire entre le tube de base et l'élément filtrant est obturé à ses deux extrémités par des pièces (4; 10) en forme de couronne, et dans lequel lesdits tubes de collecte (5) sont fixés sur une face d'une couronne au droit de perçages (8) dans la couronne de manière à ce que le conduit interne de chacun des tubes de collecte communique avec l'autre face (7) de la couronne.

4. Dispositif selon la revendication 3, dans lequel ladite couronne comporte des moyens d'obturation (19) desdits perçages (8).

5. Dispositif selon l'une des revendications 3 ou 4, dans lequel ledit espace annulaire est obturé à ses deux extrémités par des couronnes (4) portant des tubes de collecte (5).

6. Dispositif selon l'une des revendications précédentes, dans lequel des ouvertures (11) dans le tube de base (1) permettent l'écoulement d'un effluent dans l'espace intérieur dudit tube après circulation à travers l'élément filtrant (9) et les tubes de collecte (5), et dans lequel une chemise coulissante (20) interne au tube de base est adaptée à obturer lesdites ouvertures.

7. Application du dispositif selon l'une des revendications précédentes à la constitution d'une conduite filtrante placée dans un drain de collecte d'un effluent.

8. Application du dispositif selon l'une des revendications 1 à 6, à la constitution d'une conduite filtrante placée dans un drain destiné à l'injection d'un fluide.

## Patentansprüche

1. Saugkorbvorrichtung mit kontrolliertem Druckverlust, umfassend ein Filterelement (9), das umschrieben und zentriert ist auf einem Basisrohr (1) durch Zwischenstücke (14), die längs im Verhältnis zur Achse des Rohrs sind und gemäß dem Durchmesser des Rohrs derart angeordnet sind, dass der ringförmige Raum durchgeschnitten wird, der durch das Filterelement und das Rohr definiert ist, in Sektoren, die durch die Zwischenstücke begrenzt sind, und in welcher Sammelrohre (5) angeordnet sind und durch ein Ende in die Sektoren münden.

2. Vorrichtung nach Anspruch 1, in der die Zwischenstücke Öffnungen (16, 17) derart umfassen, dass die Sektoren hydraulisch untereinander kommunizieren.

3. Vorrichtung nach einem der vorhergehenden Ansprüche, in der der ringförmige Raum zwischen dem Basisrohr und dem Filterelement an seinen beiden Enden durch Stücke (4, 10) in Form einer Einfassung verschlossen ist und in der die Sammelrohre (5) auf einer Seite einer Einfassung, der gerade zu Bohrungen (8) in der Einfassung derart befestigt sind, dass die Innenleitung von jedem der Sammelrohre mit der anderen Seite (7) der Einfassung kommuniziert.

4. Vorrichtung nach Anspruch 3, bei der die Einfassung Mittel zum Verschließen (19) der Bohrungen (8) umfasst.

5. Vorrichtung nach einem der Ansprüche 3 oder 4, bei der der ringförmige Raum an seinen beiden Enden durch Einfassungen (4) verschlossen ist, die Sammelrohre (5) tragen.

6. Vorrichtung nach einem der vorhergehenden Ansprüche, bei der die Öffnungen (11) in dem Basisrohr (1) die Strömung eines Abstroms in dem Innenraum des Rohrs nach Zirkulation entlang des Filterelements (9) und der Sammelrohre (5) erlauben und in welcher ein Schiebemantel (20) am Basisrohr ausgelegt ist, um die Öffnungen zu versperren.

7. Verwendung nach einem der vorhergehenden Ansprüche zum Aufbau einer Filterleitung, die in einem Sammelablauf eines Abstroms angeordnet ist.

8. Verwendung der Vorrichtung nach einem der Ansprüche 1 bis 6 zum Aufbau einer Filterleitung, die in einem Ablauf angeordnet ist, der zum Einspritzen eines Fluids vorgesehen ist.

## Claims

1. Strainer device with controlled pressure drop including a filtering element (9) delimited and centred on a base pipe (1) by spacers (14) which are longitudinal relative to the axis of the pipe and arranged on the diameter of the pipe so as to divide the annular space, defined by the filtering element and the pipe, into sectors delimited by the said spacers, and in which collection pipes 5 are arranged and emerge through one end in the said sectors.

2. Device as described in claim 1, in which the said spacers include openings (16, 17) so that the sectors communicate with each other hydraulically.

3. Device as described in one of the preceding claims, in which the annular space between the base pipe and the filtering element is closed at its two ends by ringshaped pieces (4; 10), and in which the said collection pipes (5) are fixed to one face of a ring level with bores (8) in the ring in such a manner that the internal passage of each of the collection pipes communicates with the other face (7) of the ring.

4. Device as described in claim 3, in which the said ring includes means (19) for closing the said bores (8).

5. Device as described in one of claims 3 or 4, in which the said annular space is closed at its two ends by rings (4) carrying collection pipes (5).

6. Device as described in one of the preceding claims, in which openings (11) in the base pipe (1) permit flow of an effluent into the internal space of the said pipe after circulation through the filtering element (9) and the collection pipes (5), and in which a sliding lining (20) internal to the base pipe is suitable to close the said openings.

7. Application of the device as described in one of the preceding claims to formation of a filtering conduit placed in a drain for collection of an effluent.

8. Application of the device as described in one of claims 1 to 6 to the formation of a filtering conduit placed in a drain intended for injection of a fluid.
